# EUROPÄISCHE PATENTSCHRIFT

(11) **EP 2 449 347 B1**
(45) Veröffentlichungstag und Bekanntmachung des Hinweises auf die Patenterteilung: **17.12.2014**
(21) Anmeldenummer: 10722722.5
(22) Anmeldetag: 18.06.2010
(51) Int. Cl.: G01D 5/38, G01D 5/347, G01B 9/02

(54) **INTERFEROMETRISCHE WEG- UND/ODER DREHMESSVORRICHTUNG**
INTERFEROMETRIC DISPLACEMENT OR ROTATION MEASURING DEVICE
DISPOSITIF DE MESURE INTERFÉROMÉTRIQUE DE DÉPLACEMENT OU DE ROTATION

(30) Priorität: 29.06.2009 DE 102009027266
(43) Veröffentlichungstag der Anmeldung: 09.05.2012
(73) Patentinhaber: Robert Bosch GmbH, 70442 Stuttgart (DE)
(72) Erfinder: DRABAREK, Pawel, 75233 Tiefenbronn (DE)
(86) Internationale Anmeldenummer: PCT/EP2010/058597
(87) Internationale Veröffentlichungsnummer: WO 2011/000715

(56) Entgegenhaltungen:
- EP-A1- 1 669 725
- EP-B1- 0 420 897
- DE-A1-102006 014 766

## Beschreibung

### Stand der Technik

Die vorliegende Erfindung betrifft eine interferometrische Weg- und/oder Drehmessvorrichtung, wobei der Begriff "Drehmessvorrichtung" auch als "Winkelmessung" zu verstehen ist Das Prinzip einer derartigen Vorrichtung ist aus der EP 0 420 897 B1 bekannt. Danach wird eine Weginformation über den Doppler-Effekt erhalten und zwar werden mittels einer Modulations-Interferometereinheit erzeugte zwei optische Teilstrahlungen auf ein interferometrisches Gitter (Gittermittel) gerichtet und erzeugen an einem gemeinsamen Auftreffort eine von einer interferometrischen Lichtaufnahme, z.B. einer Photodiode, aufgenommene Interferenz.

Bewegen sich nunmehr die Gittermittel in einer linearen oder Dreh-Bewegung, lässt sich dies als Phasenänderung des Ausgangssignals (Überlagerungssignals) der Lichtaufnahmeeinheit detektieren und nachfolgend in eine gewünschte Weg- bzw. Drehweg (Winkel-) Information umsetzen.

Nach diesem Prinzip arbeitende Weg- und Drehmessvorrichtungen sind allgemein bekannt und handelsüblich und werden etwa im Bereich der industriellenund Fertigungs-Messtechnik verwendet. So ist beispielsweise aus der Offenlegungsschrift EP 1669725 A1 eine Weg- und Drehvorrichtung bekannt, welche einen separaten Lichtgenerator und eine separate Lichtaufnahmeeinheit umfasst, wobei diese durch eine Lichtfaser miteinander verbunden sind. Ferner zeigt die Offenlegungsschrift DE 102006014766 A1 ebenfalls eine derartige Vorrichtung. Hierbei wird ein Ausgangsstrahl in zwei Teilstrahlen aufgeteilt, wobei einer der Teilstrahlen gegenüber dem anderen Teilstrahl verzögert wird. Beide Teilstrahlen werden anschließen gemeinsam über eine Glasfaser geleitet.

Allerdings weist der als gattungsbildend vorausgesetzte Stand der Technik den Nachteil auf, dass die (typischerweise in ein Gehäuse integrierte) bekannte Vorrichtung, geeignet an einer Mess- oder Produktionsanlage angebracht, empfindlich gegen Umgebungseinflüsse wie Temperatur, Vibration usw. ist, so dass entweder aufwändige Maßnahmen zur Entkopplung eines solchen Gehäuses wendig sind, oder Messgenauigkeit und Einsatzbereich dieser Technologien durch die Umgebungsbedingungen begrenzt ist.

### Offenbarung der Erfindung

Aufgabe der vorliegenden Erfindung ist es daher, eine interferometrische Weg- und/oder Drehmessvorrichtung im Hinblick auf ihre universelle Einsetzbarkeit, insbesondere ihre Empfindlichkeit gegenüber Umgebungs- und Umweltbeeinflussungen, zu verbessern.

Die Aufgabe wird durch die Vorrichtung mit den Merkmalen des Hauptanspruchs gelöst; vorteilhafte Weiterbildungen der Erfindung sind in den Unteransprüchen beschrieben.

In erfindungsgemäß vorteilhafter Weise ist dabei die geeignet stationär und geschützt vorsehbare Modulations-Interferometereinheit für einen (bevorzugt langgestreckten und/oder flexiblen, eine wirksame Entkopplung bewirkenden) Lichtleiter mit der an einem konkreten Einsatz- bzw. Messort vorsehbaren Gebereinheit so verbunden, dass etwaige nachteilige Vibrations- oder Temperatureinflüsse zwar auf die Gebereinheit wirken, jedoch die Modulations-Interferometereinheit unbeeinträchtigt lassen. Zu diesem Zweck ist erfindungsgemäß vorteilhaft vorgesehen, dass die zwei Teilstrahlen (verzögert um die optische Verzögerungsstrecke länger als die optische Kohärenzlänge) gemeinsam eingekoppelt durch den Lichtleiter zur Gebereinheit geführt werden, ohne dass eine messwirksame gegenseitige Beeinflussung erfolgt.

An der in erfindungsgemäßer Weise getrennt und lediglich durch den Lichtleiter angekoppelten Gebereinheit findet dann das interferometrische Zusammenwirken mit den Gittermitteln sowie die Aufnahme des optischen Überlagerungssignals durch die Lichtaufnahmeeinheit statt, welche in ansonsten bekannter Weise mit nachgeschalteten Auswerte- und Rechnermitteln verbunden ist.

In erfindungsgemäß vorteilhafter Weise ist die Anordnung aus interferometrischer Lichtführungseinheit, interferometrischen Gittermitteln sowie interferometrischer Aufnahmeeinheit als sogenannte in-plane-Einheit nach dem Prinzip des Gitter-Interferometers realisiert; beide Teilstrahlen werden an den Gittermitteln gebeugt und zum Erzeugen des Überlagerungssignals zusammengeführt, wobei dessen Phasenveränderung dann in ansonsten bekannter Weise zum Generieren der gewünschten Weg- und/oder Winkelinformation auswertbar ist.

In erfindungsgemäß günstiger Weise ist dabei die Funktionseinheit relativ zueinander so angeordnet, dass eine durch die Gittermittel beschriebene Gitterebene sich zwischen einem Lichtaustritt der Lichtführungseinheit und der Lichtaufnahmeeinheit erstreckt.

In erfindungsgemäß vorteilhafter Weise wird gemäß bevorzugter Weiterbildungen der Erfindung die Funktion der Modulations-Interferometereinheit zur Heterodyn-Interferometrie ermöglicht. Zu diesem Zweck ist als Funktionalität der Modulations-Interferometereinheit ein (bevorzugt als akustooptischer Modulator realisierter) Modulator so vorgesehen, dass zwischen beiden Lichtstrahlen eine Frequenzverschiebung ermöglicht wird.

Um geberseitig beide Teilstrahlen nach deren Beugung an den Gittermitteln zur Interferenz bringen zu können, sind erfindungsgemäß zweite optische Verzögerungsmittel vorgesehen, mit welchen sich die optische Verzögerung um die Verzögerungsstrecke am Ende des Lichtleiters wieder ausgleichen lässt, so dass insoweit die durch die zweiten optischen Verzögerungsmittel bewirkte optische Wegdifferenz der optischen Wegdifferenz der ersten Verzögerungsmittel in der Modulations-Interferometereinheit entspricht. Geeignet ist beispielsweise eine derartige Verzögerungsstrecke durch ein (verschiebbares) Prisma realisiert.

Während es einerseits bevorzugt und von der Erfindung umfasst ist, eine interferometrische Wegmessung anhand eines entsprechend dem zu vermessenden Weg linear bewegbaren Gitter vorzunehmen, ist es gleichermaßen bevorzugt und von der Erfindung umfasst, eine interferometrische Drehmessung (Winkelmessung) vorzunehmen, bei welchem ein (z.B. sternförmiges oder auf andere Weise radialsymmetrisch ausgebildetes) Gitter um eine vorbestimmte Drehachse dreht und ein solcher durch die Drehung bewirkter Winkelversatz sich als erfindungsgemäß durch die Lichtaufnahmeeinheit detektiertes Interferenzmuster (genauer: eine interferometrisch gemessene Licht-Phasendifferenz) erschließt.

Zur Erhöhung der Winkelauflösung und gemäß einer weiteren bevorzugten Ausführungsform der Erfindung als Drehmessvorrichtung ist es dabei bevorzugt, die zwei Teilstrahlen (als Strahlenpaar) durch geeignete zusätzliche Strahlenteilung nach dem Lichtleiteraustritt zu verdoppeln und (mit jeweils einer geeigneten interferometrischen Lichtaufnahmeeinheit) an zwei Positionen des drehbeweglichen Gittermusters, z.B. beidseits der Drehachse, vorzusehen. Auf diese Weise wird bei der Drehung der Gittermittel die Lichtphase beider so erzeugter Kanäle in jeweils entgegengesetzte Richtungen verschoben.

Im Ergebnis ermöglicht es die vorliegende Erfindung, in einfacher und eleganter Weise die Gitter-Interferometrie auch in Einsatzumgebungen einzusetzen, welche durch Temperatur oder Vibration stark belastet sind. Dabei bietet sich der Einsatz der vorliegenden Erfindung für eine Vielzahl von Anwendungsgebieten an, wobei besonders offensichtlich die Eignung für industrielle Messaufgaben ist, die Anwendungsbreite der vorliegenden Erfindung jedoch hierauf nicht beschränkt ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: ein schematisches Schaltbild einer interferometrischen Wegemessvorrichtung gemäß einem ersten Ausführungsbeispiel der vorliegenden Erfindung;
- Fig. 2:: eine Detailansicht der Messeinheit (Gebereinheit) der Vorrichtung gemäß Fig. 1 als Ausschnitt II aus Fig. 1;
- Fig. 3:: ein schematisches Schaltbild einer interferometrischen Drehmessvorrichtung (Winkelmessvorrichtung) gemäß einem zweiten Ausführungsbeispiel der vorliegenden Erfindung und
- Fig. 4:: eine Detailansicht der Messeinheit (Gebereinheit) des Ausführungsbeispiels der Fig. 3, als Ausschnitt IV in Fig. 3.

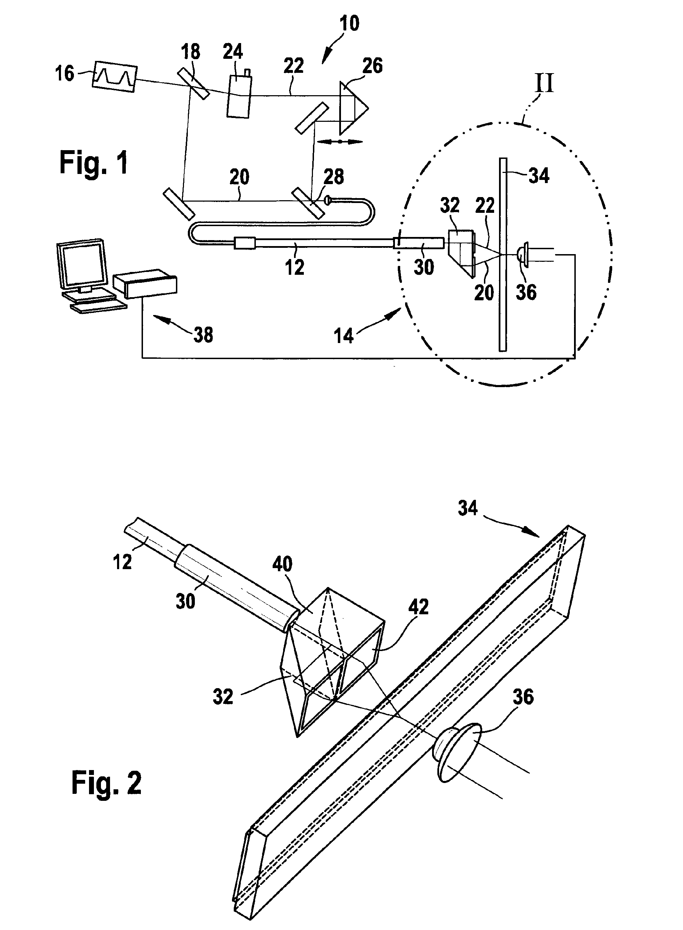

Die Fig. 1 verdeutlicht die Realisierung der interferometrischen Wegmessvorrichtung als Kombination aus einer stationär, insbesondere temperatur- und/oder vibrationsgeschützt vorgesehenen Modulations-Interferometereinheit 10, welche über einen monomodalen Lichtleiter 12 mit einer an einem Einsatz- bzw. Messort angebrachten Gebereinheit 14 verbunden ist.

Die Modulations-Interferometereinheit 10 als erstes Subsystem der Gesamtvorrichtung weist einen Heterodyn-Interferometer vom Mach-Zehnder-Typ auf, mit einer kurzkohärenten Lichtquelle 16, etwa realisiert als Superlumineszenzdiode (Wellenlänge ca. 800 nm), welcher ein Strahlenleiter 18 zum Erzeugen eines Messstrahls 20 sowie eines Referenzstrahls 22 nachgeschaltet ist. Der Referenzstrahl 22 durchläuft in ansonsten bekannter Weise einen akustooptischen Modulator 24, welcher eine Frequenzverschiebung des Referenzstrahls relativ zum Messstrahl (z.B. Frequenzdifferenz 100 kHz) bewirkt. Zusätzlich ist in dem Referenzzweig eine Verzögerungseinheit (Verzögerungsstrecke) 26 in Form eines verschiebbaren Prismas vorgesehen, welche eine Differenz der optischen Wege von Referenzstrahlen und Messstrahl bewirkt, welche größer als die Kohärenzlänge des verwendeten Lichts, insbesondere ein mehrfaches dieser Kohärenzlänge, beträgt. Im beschriebenen Ausführungsbeispiel beträgt bei einer angenommenen Kohärenzlänge der kurzkohärenten Lichtquelle 16 von ca. 100 µm die durch die Verzögerungseinheit 26 bewirkte Verzögerungsstrecke ein Millimeter, also das Zehnfache der Kohärenzlänge, und ist daher groß gegenüber der Kohärenzlänge.

Dies bewirkt, dass der nachfolgend an der Spiegeleinheit 28 mit dem Messstrahl zusammengeführte Referenzstrahl gemeinsam in den einzelnen (einzigen) Lichtleiter 12 eingekoppelt und dort geführt werden kann, ohne dass es zu einer Interferenz dieser Teilstrahlen kommt.

Im zweiten Subsystem (d.h. der Gebereinheit 14), erfolgt dann am Ausgang eines endseitig des Lichtleiters vorgesehenen Kollimators 30 eine Strahlenteilung, wobei ein vorgesehenes Umlenkprisma 32 einen der Teilstrahlen 20, 22 analog zur Prismeneinheit 26 verzögert, mit anderen Worten, die am Lichtleitereingang vorhandene relative Verzögerung aufhebt. Entsprechend können die aus dem Prisma austretenden Teilstrahlen 20, 22 in ansonsten bekannter Weise durch einen Gittermaßstab 34 als zur Bewegungsmessung bewegbaren Gittermittel hindurchtreten, werden in ansonsten bekannter Weise am Gitter gebeugt und interferieren, so dass eine bezogen auf die Gittereinheit 34 dem Prisma 32 gegenüberliegende Photodiode 36 das überlagerte Signal empfangen kann und die gewünschte Lichtphase als Phase des Photodiodensignals elektronisch in einer nachgeschalteten Auswerteeinheit 38 in ein Wegmesssignal umgesetzt werden kann; die interferometrisch gemessene Licht-Phasendifferenz beinhaltet damit die gewünschten Informationen über die Verschiebung des Gittermaßstabs 34.

Die Fig. 2 verdeutlicht in der Detailansicht das zweite Subsystem; deutlich wird, wie als Teil einer hier integriert gezeigten Baugruppe an der Prismeneinheit 32 zur Realisierung der geberseitigen Verzögerungsstrecke ein am Ausgang des Lichtleiters 12 sitzender Strahlteiler 40 vorgesehen ist. Auch sind an Austrittsflächen der Strahlenteiler/Prismeneinheit jeweilige Umlenkgitter 42 gezeigt.

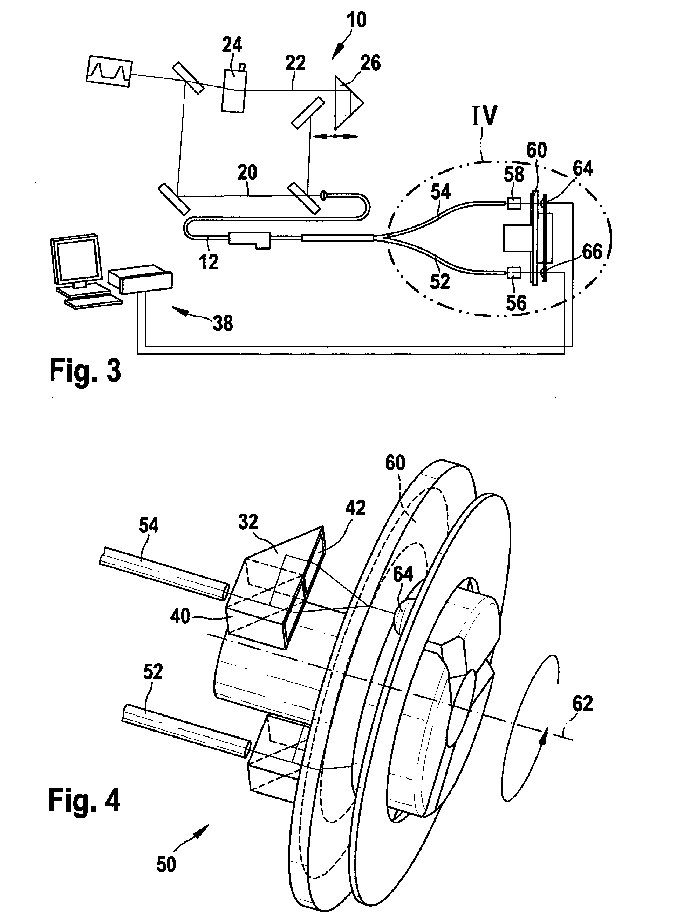

Die Fig. 3 und 4 illustrieren das zweite Ausführungsbeispiel der Erfindung zur Realisierung einer interferometrischen Drehmessvorrichtung. Die Modulations-Interferometereinheit 10 als erstes Subsystem entspricht der Einheit 10 in Fig. 1.

Endseitig des Lichtleiters 12 in Richtung auf eine zur Aufnahme eines Drehweges (Winkels) ausgebildeten Gebereinheit 50 (entsprechend Ausschnitt IV in Fig. 3) erfolgt eine Aufteilung in zwei in jeweiligen Leiterzweigen 52, 54 geführte Strahlen, welche dann einer Strahlenteiler/Prismenanordnung 56 bzw. 58 am Ende jedes Zweigs zugeführt werden. Hier erfolgt dann analog der im Zusammenhang mit Fig. 2 beschriebenen Einheit 30, 42 zunächst das Aufteilen des am Lichtleiterende austretenden Strahls sowie das Verzögern entsprechend der Verzögerungsstrecke des Prisma 26 der Einheit 10, so dass wiederum, jedoch Zweifach für 52, 54, in der vorbeschriebenen Weise die entkoppelten Teilstrahlen zur Interferenz gebracht werden können.

Drehgeber der Einheit 50 ist ein scheibenartig-drehbar gelagertes Gittermuster 60, welches strahlenartig (und ausgehend vom Achsenmittelpunkt 62) ausgebildet ist und analog zur vorbeschriebenen linearen Vorgehensweise das Aufnehmen der überlagerten, interferierenden Teilstrahlen durch eine jedem Zweig zugeordnete Photodiode 64 bzw. 66 ermöglicht. Insoweit entsteht dann, gegenüber dem Ausführungsbeispiel der Fig. 1, ein Signalpaar, welches von der Auswerteeinheit 38 zur Bestimmung der Drehbewegungsinformation ausgewertet werden kann. Die gezeigte Vorrichtung, welche in vereinfachter Form auch mit lediglich einem Zweig (und entsprechend einer zugeordneten Photodiode) funktionieren würde, zeigt auf die gezeigte Weise eine erhöhte Winkelauflösung, da bei der Drehung des Drehgitters (Drehgittermaßstabs) 60 die Lichtphase von beiden Zweigen (Kanälen) ineinander entgegengesetzte Richtungen verschoben wird.

## Patentansprüche

1. Interferometrische Weg- und/oder Drehmessvorrichtung mit einer Gittermittel (34; 60) aufweisenden Gebereinheit (14), die zum Erfassen einer Linear- und/oder Drehbewegung der Gittermittel mit einer Lichtführungseinheit (12) sowie einer Lichtaufnahmeeinheit (36) so zusammenwirkt, dass zwei auf die Gittermittel gerichtete Teilstrahlen (20, 22) der Lichtführungseinheit ein von der Lichtaufnahmeeinheit detektierbares, von der Linear- bzw. Drehbewegung und/oder einer Position der Gittermittel abhängiges Überlagerungssignal erzeugen,
wobei der Lichtführungseinheit eine Modulations-Interferometereinheit (10) vorgeschaltet ist,
**dadurch gekennzeichnet,**
**dass** die Modulations-Interferometereinheit (10) Mittel zur Strahlenteilung (18) in die zwei Teilstrahlen (20, 22) sowie erste Mittel (26) zur optischen Verzögerung für einen der zwei Teilstrahlen (20, 22) aufweist, die eine optische Verzögerungsstrecke länger als eine optische Kohärenzlänge der Teilstrahlen (20, 22) bewirken,
die Modulations-Interferometereinheit (10) über einen faseroptischen, gemeinsam mit den zwei Teilstrahlen (20, 22) beaufschlagten Lichtleiter (12) mit der Gebereinheit (14) verbunden ist
und die Lichtaufnahmeeinheit (36) an der Gebereinheit (14) vorgesehen ist.

2. Vorrichtung nach Anspruch 1,
**dadurch gekennzeichnet,**
**dass** die Lichtführungseinheit so ausgebildet ist, dass die zwei Teilstrahlen (20, 22) an den Gittermitteln gebeugt werden.

3. Vorrichtung nach Anspruch 1 oder 2,
**dadurch gekennzeichnet,**
**dass** die Lichtaufnahmeeinheit (36) in einem konstanten, invarianten Abstand zu einem Lichtaustritt der Teilstrahlen (20, 22) und so angeordnet ist, dass eine durch die Gittermittel beschriebene Gitterebene sich zwischen dem Lichtaustritt und der Lichtaufnahmeeinheit erstreckt.

4. Vorrichtung nach einem der Ansprüche 1 bis 3,
**dadurch gekennzeichnet,**
**dass** die Modulations-Interferometereinheit (10) stationär, durch eine Bewegung der Gebereinheit (14) und insbesondere durch die Linear- und/oder Drehbewegung unbeeinflusst vorgesehen ist.

5. Vorrichtung nach einem der Ansprüche 1 bis 4,
**dadurch gekennzeichnet,**
**dass** die Modulations-Interferometereinheit (10) Mittel (24) zur Frequenzverschiebung der Teilstrahlen (20, 22) gegeneinander aufweist, insbesondere als Modulator (24) für eine Heterodyn-Interferometrie ausgebildet ist.

6. Vorrichtung nach einem der Ansprüche 1 bis 5,
**dadurch gekennzeichnet,**
**dass** der Lichtleiter als Monomode-Lichtleiter (12) ausgebildet und so eingerichtet ist, dass die zwei Teilstrahlen (20, 22) in einem einander überlagerten, gegeneinander in der Zeit verzögerten Zustand eingekoppelt werden können.

7. Vorrichtung nach einem der Ansprüche 1 bis 6,
**dadurch gekennzeichnet,**
**dass** die Gebereinheit (14) Mittel (32) zur optischen Verzögerung aufweist, die so ausgebildet sind, dass die aus dem Lichtleiter (12) ausgekoppelten zwei Teilstrahlen (20,22) einen Ausgleich der optischen Verzögerungsstrecke erfahren können.

8. Vorrichtung nach einem der Ansprüche 1 bis 7,
**dadurch gekennzeichnet,**
**dass** die optische Verzögerungsstrecke das mindestens zweifache, bevorzugt das mindestens fünffache, der optischen Kohärenzlänge beträgt.

9. Vorrichtung nach einem der Ansprüche 1 bis 8,
**dadurch gekennzeichnet,**
**dass** die ersten und/oder die zweiten Mittel zur optischen Verzögerung eine Prismeneinrichtung aufweisen.

10. Vorrichtung nach einem der Ansprüche 1 bis 9,
**dadurch gekennzeichnet,**
**dass** die zum Erfassen einer Drehbewegung ausgebildeten Gittermittel (60) radial, insbesondere sternförmig, um eine Drehachse (62) ausgerichtet sind und der Gebereinheit (14) Strahlenteilermittel so vorgeschaltet sind, dass zwei Paare der Teilstrahlen (20, 22) mit den Gittermitteln zusammenwirken, insbesondere beidseits der Drehachse.

## Claims

1. Interferometric distance and/or rotary measuring apparatus having a transmitter unit (14) having grating means (34; 60), which interacts, for capturing a linear and/or rotary movement of the grating means, with a light guiding unit (12) and a light receiving unit (36) such that two partial beams (20, 22) of the light guiding unit directed onto the grating means generate a superposition signal which is detectable by the light receiving unit and is dependent on the linear or rotary movement and/or a position of the grating means, wherein the light guiding unit has connected upstream of it a modulation interferometer unit (10),
**characterized in that**
the modulation interferometer unit (10) has means (18) for splitting a beam into the two partial beams (20, 22) and first means (26) for optically retarding one of the two partial beams (20, 22) that bring about an optical retardation distance that is longer than an optical coherence length of the partial beams (20, 22), the modulation interferometer unit (10) is connected to the transmitter unit (14) via a fibre-optic light guide (12) on which the two partial beams (20, 22) together are incident,
and the light receiving unit (36) is provided on the transmitter unit (14).

2. Apparatus according to Claim 1, **characterized in that** the light guiding unit is configured such that the two partial beams (20, 22) are diffracted at the grating means.

3. Apparatus according to Claim 1 or 2, **characterized in that** the light receiving unit (36) is arranged at a constant, invariant distance from a light exit of the partial beams (20, 22) such that a grating plane described by the grating means extends between the light exit and the light receiving unit.

4. Apparatus according to one of Claims 1 to 3, **characterized in that** the modulation interferometer unit (10) is provided to be stationary and free from influence from a movement of the transmitter unit (14) and in particular from the linear and/or rotary movement.

5. Apparatus according to one of Claims 1 to 4, **characterized in that** the modulation interferometer unit (10) has means (24) for shifting the frequency of the partial beams (20, 22) relative to one another, and is configured in particular as a modulator (24) for heterodyne interferometry.

6. Apparatus according to one of Claims 1 to 5, **characterized in that** the light guide is configured as a single-mode light guide (12) and is embodied such that the two partial beams (20, 22) can be coupled in in a state in which they are superposed and with time retardation between them.

7. Apparatus according to one of Claims 1 to 6, **characterized in that** the transmitter unit (14) has means (32) for optical retardation, which means are configured such that the two partial beams (20, 22) coupled out of the light guide (12) can undergo compensation of the optical retardation distance.

8. Apparatus according to one of Claims 1 to 7, **characterized in that** the optical retardation distance is at least twice, preferably at least five times the optical coherence length.

9. Apparatus according to one of Claims 1 to 8, **characterized in that** the first and/or the second means for optical retardation have a prism device.

10. Apparatus according to one of Claims 1 to 9, **characterized in that** the grating means (60) configured for capturing a rotary movement are aligned radially, in particular in the shape of a star, about a rotary axis (62) and beam splitting means are connected upstream of the transmitter unit (14) such that two pairs of the partial beams (20, 22) interact with the grating means, in particular on both sides of the rotary axis.

## Revendications

1. Ensemble de mesure interférométrique de déplacement et/ou de rotation, l'ensemble présentant une unité émettrice (14) présentant un moyen (34, 60) à grille et coopérant avec une unité (12) d'amenée de lumière ainsi qu'une unité (36) de reprise de lumière qui saisit un déplacement linéaire et/ou de rotation du moyen à grille en formant par deux faisceaux partiels (20, 22) de l'unité d'amenée de lumière, orientés sur les moyens à grille, un signal , de superposition détectable par l'unité de reprise de lumière et dépendant du déplacement linéaire ou de rotation et/ou de la position des moyens à grille,
l'unité d'amenée de lumière étant précédée par une unité (10) d'interféromètre à modulation,
**caractérisé en ce que**
l'unité (10) d'interféromètre à modulation présente des moyens de division (18) du faisceau en deux faisceaux partiels (20, 22) ainsi que des premiers moyens (26) de retardement optique de l'un des deux faisceaux partiels (20, 22), qui ont pour effet que le parcours de retardement optique est plus long que la longueur optique de cohérence des faisceaux partiels (20, 22),
**en ce que** l'unité (10) d'interféromètre à modulation est raccordée à l'unité émettrice (14) par un conducteur de lumière (12) à fibres optiques sur lequel les deux faisceaux partiels (20, 22) sont appliqués simultanément et
**en ce que** l'unité (36) de reprise de lumière est prévue sur l'unité réceptrice (14).

2. Ensemble selon la revendication 1, **caractérisé en ce que** l'unité d'amenée de lumière est configurée de manière à ce que les deux faisceaux partiels (20, 22) soient réfractés sur les moyens à grille.

3. Ensemble selon les revendications 1 ou 2, **caractérisé en ce que** l'unité (36) de reprise de lumière est disposée à une distance constante et invariable de la sortie de lumière des faisceaux partiels (20, 22) de telle sorte qu'un plan de grille décrit par les moyens à grille s'étende entre la sortie de lumière et l'unité de reprise de lumière.

4. Ensemble selon l'une des revendications 1 à 3, **caractérisé en ce que** l'unité (10) d'interféromètre à modulation est stationnaire et n'est pas influencée par un déplacement de l'unité émettrice (14) et en particulier par le déplacement linéaire et/ou le déplacement de rotation.

5. Ensemble selon l'une des revendications 1 à 4, **caractérisé en ce que** l'unité (10) d'interféromètre à modulation présente des moyens (24) de décalage en fréquence des faisceaux partiels (20, 22) l'un par rapport à l'autre, et en particulier est configurée comme modulateur (24) permettant une interférométrie hétérodyne.

6. Ensemble selon l'une des revendications 1 à 5, **caractérisé en ce que** le conducteur de lumière est configuré comme conducteur de lumière (12) monomodal et est conçu de telle sorte que les deux faisceaux partiels (20, 22) puissent être injectés dans des conditions de superposition mutuelle et de retardement mutuel par rapport au temps.

7. Ensemble selon l'une des revendications 1 à 6, **caractérisé en ce que** l'unité émettrice (14) présente des moyens (32) de retardement optique configurés de manière à ce que les deux faisceaux partiels (20, 22) sortant du conducteur de lumière (12) puissent subir une compensation du parcours de retardement optique.

8. Ensemble selon l'une des revendications 1 à 7, **caractérisé en ce que** le parcours optique de retardement représente au moins le double et de préférence au moins le quintuple de la longueur de cohérence optique.

9. Ensemble selon l'une des revendications 1 à 8, **caractérisé en ce que** les premiers et/ou les deuxièmes moyens de retardement optique présentent un dispositif à prisme.

10. Ensemble selon l'une des revendications 1 à 9, **caractérisé en ce que** les moyens (60) à grille configurés pour saisir un déplacement de rotation sont orientés radialement et en particulier en étoile autour d'un axe de rotation (62) et **en ce que** des moyens de division de faisceau sont raccordés en amont de l'unité émettrice (14) de telle sorte que deux paires de faisceaux partiels (20, 22) coopèrent avec les moyens à grille, en particulier des deux côtés de l'axe de rotation.
